# FASCICULE DE BREVET EUROPEEN

(11) **EP 4 400 296 B1**
(45) Date de publication et mention de la délivrance du brevet: **25.02.2026**
(21) Numéro de dépôt: 24178821.5
(22) Date de dépôt: 07.06.2019
(51) Int. Cl.: A43B 5/02, A43B 23/04, A43B 23/02, A43B 1/04, B29D 35/12, B29D 35/14

(54) **PROCEDE DE FABRICATION D'UNE CHAUSSURE, ET CHAUSSURE SUSCEPTIBLE D'ETRE OBTENUE PAR LEDIT PROCEDE**
VERFAHREN ZUR HERSTELLUNG EINES SCHUHS UND DURCH DIESES VERFAHREN ERHÄLTLICHER SCHUH
METHOD FOR MAKING A SHOE, AND SHOE CAPABLE OF BEING OBTAINED BY SAID METHOD

(30) Priorité: 08.06.2018 FR 1855042
(43) Date de publication de la demande: 17.07.2024
(62) Demande divisionnaire de: 19791304.9
(73) Titulaire: Decathlon, 59650 Villeneuve d'Ascq (FR)
(72) Inventeur: VENTENAT, Vincent, 59650 VILLENEUVE D'ASCQ (FR)
(74) Mandataire: Cabinet Beau de Loménie

(56) Documents cités:
- WO-A1-2016/156676
- US-A1- 2016 206 039
- US-A1- 2017 181 501

## Description

La présente invention concerne le domaine technique des procédés de fabrication d'un composant pour chaussure ou d'une chaussure.

La présente invention a également pour objet les chaussures obtenues par la mise en œuvre desdits procédés de fabrication.

### Arrière-plan de l'invention

EP 2 815 668 A1 a pour objet un procédé de fabrication d'une chaussure comprenant une première étape de fabrication de la tige moulée au-cours de laquelle un noyau rigide en forme de pied est recouvert par un élément de tige puis disposé dans un moule. Une résine est ensuite injectée dans ledit moule selon un masque recouvrant tout ou partie de la tige. La tige ainsi préparée est ensuite disposée dans un moule pour la fabrication de la semelle extérieure par injection d'une résine directement sur la face inférieure de la tige. Ce procédé permet de fabriquer et d'assembler la tige et la semelle d'une chaussure de manière simplifiée sans couture.

WO 2014/130598 A2 a pour objet un procédé de fabrication de la tige d'une chaussure comprenant la disposition d'une tige sur un noyau rigide perforée disposée sur un plateau. Une membrane déformable étanche est disposée sur la tige placée sur le noyau, puis la membrane est plaquée contre la tige et donc le noyau sous l'effet de l'aspiration de l'air à travers les perforations du noyau. Lors de cette étape, le noyau est chauffé afin que la tige adhère éventuellement à un autre élément au moins en partie thermofusible. Ce procédé permet de fabriquer une tige en évitant des coutures mais il n'est pas adapté pour solidariser en même temps une semelle à la tige.

FR 3 007 317 A1 a pour objet un procédé de fabrication d'une tige d'une chaussure comprenant la disposition d'une tige sur un noyau rigide, puis d'une membrane étanche sur la tige, l'ensemble étant placé dans une enceinte dans laquelle une mise sous vide est effectuée en sorte de presser la membrane sur le noyau et donc la tige. Les procédés précédents cherchent à diminuer le nombre d'étapes nécessaires dans la construction d'une chaussure, en particulier en supprimant des étapes de couture consistant à rapporter la tige sur une semelle. En effet, les semelles sont traditionnellement dans l'état de la technique solidarisées avec les tiges à l'aide d'un montage dénommé Strobel au-cours duquel les différents éléments de semelage (semelle de propreté, semelle intermédiaire et semelle d'usure notamment) sont collés. Néanmoins, dans les procédés précédents au cours desquels la semelle est solidarisée à la tige lors de la confection de la tige et/ou de la semelle, l'ensemble semelle-tige a une mauvaise résistance à la délamination, la semelle ayant tendance à se désolidariser de la tige. Cet inconvénient est amplifié lorsque la semelle est soumise à des forces tendant à l'écarter de la tige. Ce phénomène s'observe notamment lorsque la semelle comprend des projections sur sa face inférieure venant en prise avec le sol, par exemple pour des chaussures pour la pratique du football ou de la randonnée.

US 2016/0206039 A1 a pour objet un article chaussant incluant un système de semelle, incluant une tige et un système de semelle. Le système de semelle inclut un composant tricoté incorporant une semelle extérieure tricotée en une pièce. WO2016156676A1 a pour objet le procédé de fabrication d'une chaussure comprenant un premier chausson principal et un premier chausson auxiliaire dans une pièce textile, dont au moins une partie ou l'intégralité est thermofusible.

La présente invention propose une chaussure dont le procédé de fabrication permet un gain de temps et de main d'œuvre très significatif.

La présente invention propose une chaussure ayant un rendu esthétique différent des chaussures obtenues par un montage strobel, plus légères, consommant moins de matières pour sa fabrication, diminuant ainsi son impact environnemental, notamment en évitant le recours au patronage des tiges, et ayant une semelle d'usure résistante à l'abrasion et assurant les performances d'amorti.

La présente invention propose une chaussure dont l'enfilage est facilité, ayant un toucher amélioré, confortable, et une résistance à la délamination de la semelle d'usure améliorée.

### Objet et résumé de l'invention

L'invention est telle que définie dans les revendications jointes.

Avantageusement, le premier chausson auxiliaire, est fondu, au moins en partie ou intégralement, et permet ainsi d'améliorer la résistance au délaminage entre la semelle d'usure et le premier chausson principal puisqu'il recouvre leur jonction.

De plus le premier chausson auxiliaire étant dans une pièce textile, il est possible de sélectionner la disposition des fils thermofusibles, sa forme par rapport aux zones du premier chausson principal à recouvrir, notamment selon les effets techniques de renforcement/souplesse et esthétiques recherchés.

L'utilisation d'une pièce textile sous forme de chausson, au moins en partie ou intégralement thermofusible, facilite son placement correcte sur le premier chausson principal, lequel est placé sur une préforme.

De préférence, le premier chausson principal et/ou le premier chausson auxiliaire et/ou le second chausson principal (décrit ci-après) et/ou le second chausson auxiliaire (décrit ci-après) et/ou la chaussette additionnelle, est / sont chacun(e), une enveloppe comprenant une partie de semelle (destinée à venir sous le pied du porteur), une partie latérale (destinée à venir en contact avec le côté latéral du pied du porteur), une partie médiale (destinée à venir en contact avec le côté médial du pied du porteur), une partie avant dans le prolongement des parties médiale, latérale et de semelle (destinée à recouvrir l'avant du pied), et une partie arrière dans le prolongement des parties médiale, latérale et de semelle (destinée à recouvrir l'arrière du pied).

L'enveloppe délimite de préférence un volume interne destiné à recevoir le pied du porteur.

Dans un mode de réalisation, ladite enveloppe est dans une pièce textile unitaire.

On comprend par pièce textile unitaire que les parties de semelle, latérale, médiale, avant et arrière sont dans une même pièce textile obtenue en sortie d'un métier textile. La mise à la forme d'une enveloppe de la pièce textile peut être obtenue sur le métier textile, par exemple par tricotage sur le métier à tricoter, ou à l'aide de couture. Dans ce dernier cas, les bordures libres de la pièce sont assemblées mais aucun empiècement n'est rajouté pour terminer la pièce autre que pour renforcer les bordures de solidarisation.

La pièce textile peut comprendre un premier motif de fond (par exemple lié au schéma de mailles ou à l'armure de tissage) et au moins un second motif (lié également au schéma de maille ou l'armure de tissage) différent du premier motif (distinguable visuellement et/ou au toucher et/ou selon la souplesse et/ou selon l'épaisseur).

La pièce textile comprend au niveau de l'ouverture du (premier/second) chausson (principal/auxiliaire), ou encore de l'ouverture de la chaussette additionnelle (définie ci-après), pour l'introduction du pied, une zone en forme de collier fermé ou ouvert, dans un schéma de mailles du type côte n X p, n et p étant des nombres entiers différents de 0 et inférieurs ou égaux à 5, par exemple des côtes 1x1, ou 1x2. Cette zone forme ainsi une bordure souple facilitant l'introduction du pied.

Dans un mode de réalisation, le premier chausson principal et/ou le premier chausson auxiliaire et/ou le second chausson principal (décrit ci-après) et/ou le second chausson auxiliaire (décrit ci-après), est / sont chacun, dans une pièce textile unitaire tricotée ou tissée.

De préférence, le premier chausson principal et/ou le premier chausson auxiliaire et/ou le second chausson principal (décrit ci-après) et/ou le second chausson auxiliaire (décrit ci-après) et/ou la chaussette additionnelle, est / sont chacun, dans une pièce textile obtenue par la manipulation mécanique d'un ensemble de fils, notamment sur un métier à tricoter ou à tisser. Le métier à tricoter peut être un métier à tricoter circulaire, de préférence de petit diamètre, ou un métier à tricoter rectiligne, de préférence dont la longueur des fontures est réduite. La pièce textile peut être une pièce tricotée à mailles cueillies ou à mailles jetées, notamment indémaillables, mais est de préférence dans une pièce tricotée à mailles cueillies (les mailles sont formées dans le sens de la trame, et non dans le sens des colonnes tel que cela est le cas pour une pièce tricotée à mailles jetées).

La ou les pièce(s) textile(s) dans laquelle ou lesquelles est/sont formé(s) un ou plusieurs chaussons selon l'invention peut/peuvent comprendre chacune, indifféremment dans une ou plusieurs parties choisie(s) parmi la partie de semelle, la partie médiale, la partie latérale, la partie d'avant-pied, et la partie arrière, une couche textile ou au moins deux couches textiles superposées, notamment substantiellement coextensives.

Lorsque la pièce textile est de construction textile unitaire, la ou les au moins deux couches textiles est/sont de construction textile unitaire avec la pièce textile les comprenant.

Encore de préférence, ladite pièce textile comprend des fils choisis parmi des fils multi filamentaires, des fils mono filamentaires, et des fils filés de fibres, plus particulièrement les fils peuvent être de la même couleur ou être dans des couleurs différentes.

Les fils mono filamentaires ont de préférence un diamètre supérieur à 0,01 mm et inférieur ou égal à 5 mm, encore de préférence supérieur ou égal à 0,1 mm et inférieur ou égal à 2 mm.

Les fils multi filamentaires et/ou fils filés de fibres ont de préférence un titre supérieur ou égal à 10 dtex et inférieur ou égal à 1 000 dtex, encore de préférence supérieur ou égal à 30 dtex et inférieur ou égal à 500 dtex.

Les fils multi filamentaires peuvent être des fils texturés FDY (Full Drawn Yarn), DTY (Draw Textured Yarn) ou encore POY (Partially Oriented Yarn), ou un mélange de ces derniers.

Les fils peuvent être thermofusibles, au moins en partie ou intégralement, ou ne pas être thermofusibles.

Les fils thermofusibles peuvent être des fils comprenant au moins deux composants, notamment du type bi-composants, un premier composant ayant une température de fusion inférieure ou égale à la température de chauffage Tc, et un second composant ayant une température de fusion ou de dégradation donnée supérieure à la température de chauffage Tc.

Les fils thermofusibles peuvent être des fils mono composant dont la température de fusion est inférieure ou égale à la température de chauffage Tc.

Les premier et/ou second chausson(s) auxiliaire(s) peut/peuvent comprendre (ou être constitué(s)) d'un ou de plusieurs fils thermofusibles mono composant et/ou bi composants, avec éventuellement des fils non thermofusibles (définis ci-après).

De préférence, les premier et/ou second chausson(s) auxiliaire(s) est/sont constitué(s) (d'au moins) de plusieurs fils thermofusibles mono composant, en particulier dont le titre est compris entre 300 dtex et 900 dtex (bornes incluses), plus particulièrement compris entre 400 dtex et 800 dtex (bornes incluses), notamment de l'ordre de 600 dtex.

Les premier et/ou second chausson(s) princip(al)(aux) et/ou le chausson additionnel peut/peuvent comprendre un ou plusieurs fils non thermofusibles, éventuellement en mélange avec un ou plusieurs fils thermofusibles mono composant et/ou bi composants.

Le premier composant peut être choisi parmi les polyuréthanes, notamment les polyuréthanes thermoplastiques, les polyamides, tels que le polyamide 6 ou 66, les polyoléfines, tels que le polypropylène (PP) ou le polyéthylène (PE), de préférence parmi les polyuréthanes.

Le premier composant peut être coloré ou incolore et/ou opaque ou transparent.

Le second composant peut être choisi parmi les polyoléfines, tels que le polyéthylène haute densité, les polyamides, tels que le polyamide 4-6, les polyesters, tel que le polyéthylène téréphtalate.

Les fils bi composants peuvent être du type cœur-manteau, le cœur étant formé du second composant et le manteau étant formé du premier composant.

Les fils multi filamentaires et/ou les fils mono filamentaires et/ou les fils filés, en particulier non thermofusibles ou dont la température de fusion globale ou de dégradation globale est supérieure à la température de chauffage Tc, sont choisis parmi une première liste de composés synthétiques : les polyesters, notamment le polyéthylène téréphtalate ; les polyamides, tels que le PA 6, le PA 66, le PA 4-6, le PA 12 ; les polyoléfines, tels que le polypropylène, le polyéthylène, le PEEK, le PEUHMW (polyéthylène à très haut poids moléculaire) ; les aramides, notamment le méta-aramide ou le para-aramide ou un mélange de ces derniers ; les acétates de vinyle ; les polyacryliques, tel que le polyacrylonitrile ; les élastomères ; les élasthannes, ou un mélange de ces derniers; et/ou une seconde liste de composés, en particulier de composés naturels ou issus de matières naturelles régénérées : le coton, la viscose, le lin, le sisal, la laine, la jute, la soie, le chanvre, et/ou une troisième liste de composés inorganiques : le carbone, des fibres minérales, telle que la fibre de roche, le verre.

Dans un mode de réalisation, le premier chausson principal et/ou la second chausson principal comprend/comprennent chacun, une zone (de construction textile unitaire avec l'enveloppe textile) en forme de C ou de O entourant tout ou partie de l'ouverture d'introduction du pied et/ou une zone de cou-de-pied s'étendant de l'ouverture d'introduction du pied vers l'avant du pied comprenant au moins un fil élastique, notamment en élasthanne.

Cette disposition confère de la souplesse à la tige et facilite l'introduction du pied puis son maintien.

On comprend par fil élastique dans le présent texte, tout fil dont l'allongement à rupture est supérieur ou égal à 200%, en particulier supérieur ou égal à 300%, notamment supérieur ou égal à 400%. Le fil élastique comprend de préférence une âme élastique, notamment en élasthanne, et éventuellement un ou plusieurs fils de couverture, notamment dans la première liste citée ci-dessus. L'allongement peut être mesuré à l'aide de la norme ASTM D 1578-93(2016)

Dans un mode de réalisation, le premier chausson principal et/ou le second chausson principal comprennent des fils multi filamentaires dont le titre est compris entre 300 dtex et 600 dtex, notamment en polyéthylène téréphtalate, en particulier de 468 dtex pour 204 filaments.

Dans un mode de réalisation, le premier chausson principal et/ou le second chausson principal comprend/comprennent chacun, un premier ensemble de mailles bouclées tricotées dont chacune est formée par au moins deux fils, notamment deux ou trois fils, et un second ensemble de mailles bouclées tricotées (*loop knit stitch*) dont chacune est formée par un seul fil, de préférence les fils des premier et second ensembles ont des titres (dtex) similaires. Le premier ensemble de mailles et/ou le second ensemble de mailles peut/peuvent être disposés indifféremment dans l'une des parties suivantes de l'enveloppe textile : la partie médiale, la partie latérale, la partie arrière, la partie avant et éventuellement la partie de semelle.

Cette disposition est obtenue avantageusement en disposant au moins plusieurs fils dans la même aiguille lors du tricotage de la pièce textile formant le chausson. Avantageusement, le premier ensemble de mailles forme une première région dont l'épaisseur (mm) est supérieure à l'épaisseur de la seconde région formée par le second ensemble de mailles.

De préférence, la semelle d'usure comprend des faces interne et externe opposées, la face interne étant orientée vers la partie de semelle du premier chausson principal, et la face externe étant orientée à l'extérieur de la chaussure en sorte de venir directement en contact, au moins en partie, avec le sol.

Avantageusement, la partie de semelle du premier chausson principal comprend des faces interne et externe opposées, la face interne débouchant dans le volume intérieur du premier chausson principal destiné à recevoir le pied, et la face externe est disposée contre la face interne de la semelle d'usure.

Dans une sous-variante, la partie de semelle du premier chausson principal comprend au moins 30% en masse, en particulier au moins 40% en masse, plus particulièrement au moins 50% en masse, par rapport à la masse totale de la partie de semelle du premier chausson principal, de fils thermofusibles, notamment dont la température de fusion la plus élevée est inférieure ou égale à la température de chauffage Tc.

De préférence, la partie de semelle du premier chausson principal est constituée intégralement de fils thermofusibles, notamment dont la température de fusion la plus élevée est inférieure ou égale à la température de chauffage Tc, de sorte que suite à l'étape vi), le premier chausson principal ne comprend plus de partie de semelle

La matière fondue de la partie de semelle du premier chausson principal adhère à la semelle d'usure, et renforce la solidarisation du premier chausson principal, notamment selon le pourtour des parties médiale, latérale, avant et arrière à la face interne de la semelle d'usure.

La semelle d'usure peut être collée et/ou cousue à la partie de semelle du premier chausson principal ou encore, et de préférence, extrudée et (sur)moulée, ou injectée ((sur)moulée), ou obtenue par fabrication additive, sur la partie de semelle du premier chausson principal.

Lorsque la semelle d'usure est collée et/ou cousue, elle est de préférence une pièce moulée ou une pièce textile en trois dimensions, par exemple comprenant des couches interne et externe textiles reliées entre-elles par des fils de liaison.

La semelle d'usure comprend de préférence un ensemble de projections se projetant de sa face externe (et donc destinées à venir en contact avec le sol), par exemple des crampons.

La semelle d'usure peut comprendre au moins une projection, éventuellement un ensemble de projections, se projetant de sa face interne (et donc dans le volume interne recevant le pied), par exemple au niveau de la région de talon et/ou de la région d'avant-pied. La ou lesquelles projection(s) a/ont une fonction d'amorti et/ou d'organe(s) de solidarisation configuré(s) pour coopérer avec un/des organe(s) de solidarisation complémentaire(s) que comprend la chaussure.

La semelle d'usure peut être dans un ou plusieurs matériau(x) choisi(s) parmi : les polyuréthanes, notamment thermoplastiques, les élastomères thermoplastiques, les silicones, les caoutchoucs naturels ou synthétiques, tel que l'acétate de vinyle d'éthylène (EVA), par exemple un caoutchouc en styrène butadiène, les caoutchoucs EPDM (éthylène-propylène-diène monomère), les polyamides, ou leur mélange. Bien évidemment, lorsque la semelle d'usure est injectée ou extrudée, le ou les matériaux la composant est/sont choisi(s) en sorte de convenir à la mise en œuvre de cette technique, en particulier est/sont thermoplastique(s).

De préférence, la ou les projections se projetant de la face interne et/ou de la face externe de la semelle d'usure, est/sont également dans le ou les matériau(x) choisi(s) parmi ceux cités ci-avant entrant dans la composition de la semelle d'usure.

On comprend par fabrication additive dans le présent texte, toute technique de fabrication en trois dimensions d'une pièce, en particulier d'une semelle d'usure, consistant à déposer une composition comprenant au moins un matériau (notamment choisi parmi ceux cités ci-avant, en particulier à l'état fondu) sur un support (en particulier la partie de semelle du premier chausson principal) par couches successives. La fabrication additive comprend de préférence l'impression 3D et/ou toute technique de frittage pouvant être mise en œuvre pour la fabrication d'une semelle d'usure et/ou toute technique dite de coulée sous vide.

Le ou les matériaux pouvant être mis en œuvre dans la fabrication de la semelle d'usure est/sont choisis parmi la liste citée ci-dessus mais également parmi les polyesters, tel que l'acide polyactique et ses dérivés, l'ABS (acrylonitrile butadiène styrène), les polyuréthanes thermoplastiques, les polyamides, et les résines photo réticulables.

On comprend par jonction dans le présent texte, la zone selon laquelle la semelle d'usure et le premier chausson principal sont joints.

La préforme a de préférence une forme de pied.

Dans un premier mode de réalisation, le chauffage à l'étape (vi) met en œuvre un système de chauffage, notamment par infra-rouge ou par induction ou à l'aide de résistance(s) électrique(s) chauffante(s), agencé à l'intérieur et/ou à l'extérieur de la préforme.

Lors de l'étape (vi), l'ensemble disposé sur la préforme peut être également, de manière alternative ou complémentaire, soumis à une source de chauffage appliquée, notamment supérieure ou égale à Tc, extérieurement à l'ensemble disposé sur la préforme. Ladite source de chauffage peut être agencée dans une enceinte, au moins partiellement fermée, chauffée, notamment à une température supérieure ou égale à Tc ou agencée dans un contre-moule configuré en sorte d'être complémentaire de la préforme, et notamment recevoir l'ensemble de l'étape (vi).

Lors de l'étape (vi), en combinaison avec le premier mode de réalisation, l'ensemble disposé sur la préforme est placé, au moins en partie, dans un contre-moule. Le contre-moule, coopérant avec la préforme, peut être en deux ou en trois parties.

Le contre-moule peut comprendre une ou plusieurs source(s) de chauffage (infra-rouges ou autres), notamment dont la température de chauffage est supérieure ou égale à Tc.

La face interne du contre-moule en contact avec l'ensemble peut comprendre une ou plusieurs région(s)e lisse(s) et/ou comprendre une ou plusieurs région(s) gravée(s) permettant d'attribuer des motifs en reliefs suite à la fusion totale ou partielle du premier chausson auxiliaire et/ou du second chausson auxiliaire.

Avantageusement, une région lisse du contre-moule forme une région brillante en surface de l'ensemble thermoformé et donc de la tige par opposition à une région gravée permettant d'obtenir une surface en reliefs et/ou mate.

La préforme peut être une pièce rigide ou une enveloppe souple, en particulier étanche, configurée pour être gonflée.

Lorsque la préforme est dans une enveloppe souple, le procédé comprend des moyens de gonflage permettant de gonfler l'enveloppe souple et de la plaquer contre les parois internes du premier chausson principal. De préférence, l'ensemble est alors pris en sandwich entre l'enveloppe gonflable et le contre-moule.

Il est possible de disposer un élément rigide ou semi-rigide à l'intérieur de la préforme gonflable afin de la maintenir en position et à la forme du pied pendant le gonflage.

La détermination de la pression de gonflage et de la ou des températures de chauffage font parties des connaissances générales de la personne du métier et déterminées par des essais de routine.

Dans une sous-variante, le contre-moule coopérant avec la préforme comprend une surface de base définissant un volume de base correspondant à une forme de pied déterminée et une ou plusieurs régions se projetant de la surface de base dans ledit volume et/ou en retrait de la surface de base, notamment à l'extérieur dudit volume.

Avantageusement, l'ensemble est thermoformé selon un volume de base correspondant à la forme déterminée d'un pied pour un taillant donné. Les régions en retrait du volume de base permettent à l'ensemble mis en forme de présenter une épaisseur plus importante que dans les régions se projetant dans le volume de base.

Dans un mode de réalisation, la préforme lorsqu'elle est dans une enveloppe souple peut comprendre des projections dont les extrémités libres sont pointues afin que lors de l'étape (vi) ces dernières pénètrent au moins partiellement dans l'épaisseur de l'ensemble, en particulier dans la face interne de l'ensemble, notamment formée de la face interne du premier chausson principal, vers éventuellement la face externe de l'ensemble, notamment formée de la face externe du premier ou second chausson auxiliaire. Avantageusement, ces projections viennent en appui contre la face interne de l'ensemble soumis à la chaleur générant ainsi des micro-perforations produisant ainsi un ensemble laissant passer l'air et donc respirant. La taille des extrémités des projections peut être déterminée en sorte que l'ensemble soit perméable à l'air mais imperméable à l'eau.

L'utilisation d'une préforme rigide permet que les moyens de chauffage soient disposés à l'intérieur de la préforme tandis que l'utilisation d'une préforme souple et donc gonflable nécessite que les moyens de chauffage soient supportés par le contre-moule complémentaire.

La technique de mise en forme de la tige résultant de la mise en œuvre de l'ensemble selon le procédé de l'invention est fonction de la précision du chauffage désirée, de la composition de l'ensemble et donc du rendu (esthétique) souhaité.

L'ensemble obtenu à l'étape (vii) forme de préférence la tige de la chaussure.

Un ou des éléments additionnel(s), notamment de renfort, par exemple un contrefort ou un bout dur, peut/peuvent être rapporté(s) sur l'ensemble.

Dans une variante de réalisation, le premier chausson auxiliaire est dans une pièce textile unitaire, notamment tricotée.

Cette disposition améliore la productivité du procédé puisqu'il n'est pas nécessaire de solidariser différents composants ensemble pour la fabrication d'une tige.

Par ailleurs, le rendu esthétique obtenu est diffèrent.

Dans une variante de réalisation, la partie thermo fusible du premier chausson auxiliaire représente au moins 50%, encore de préférence au moins 80%, en masse de la masse totale dudit premier chausson auxiliaire, préférentiellement au moins 90%, en particulier au moins 95%, plus particulièrement au moins 99% ou environ 100% en masse de la masse totale du premier chausson auxiliaire (dans ce cas l'intégralité du chausson est thermofusible).

De préférence, le premier chausson auxiliaire est totalement fusionné sur le premier chausson principal.

Lorsque le premier chausson auxiliaire n'est pas totalement thermofusible, la partie thermofusible peut correspondre à une ou plusieurs zone(s) répartie(s) sur le premier chausson auxiliaire, notamment réparties dans une ou plusieurs parties choisies parmi les parties de semelle, avant, arrière, latérale et médiale.

La partie thermofusible ou la totalité du premier chausson auxiliaire fusionné(e) flue dans l'épaisseur du premier chausson principale et forme un film sur tout ou partie de ce dernier.

Dans une variante de réalisation, la semelle d'usure comprend selon sa face externe au moins une projection se projetant de cette dernière, et la partie de semelle du premier chausson auxiliaire comprend au moins une zone adaptée pour recevoir, au moins en partie, ladite projection.

Ladite projection peut être un crampon ou encore tout ou partie du talon. Ladite au moins une projection se projetant de la face externe de la semelle d'usure vient naturellement directement en contact avec le sol.

Dans un mode de réalisation, ladite zone adaptée est une poche de construction textile unitaire avec le premier chausson auxiliaire ou, de préférence, une ouverture traversante (c'est-à-dire s'étend de sa face interne vers sa face externe), en particulier de construction textile unitaire avec le premier chausson auxiliaire.

Dans un mode de réalisation, la partie de semelle du premier chausson auxiliaire comprend un ensemble d'ouverture, en particulier supérieur ou égal à 2, notamment compris entre 5 et 12.

Dans un mode de réalisation, la semelle d'usure comprend selon sa face externe un ensemble de projections, notamment des crampons pour la pratique du football ou de la randonnée par exemple, se projetant de cette dernière.

Les projections, notamment les crampons, sont logés dans les poches ou se projettent à travers lesdites ouvertures traversantes.

Naturellement, la ou les projections, notamment la ou lesdits crampons, se projetant de la face externe de la semelle d'usure est/sont destinés en fonctionnement à entrer en contact directement avec le sol.

Dans un mode de réalisation, ladite zone adaptée est une poche, et la semelle d'usure munie de ses projections est rapportée contre la face interne de la partie de semelle du premier chausson principal. Dans ce cas, la semelle d'usure n'est pas surmoulée sur la partie de semelle du premier chausson principal.

Dans une variante, ladite au moins une projection comprend une face inférieure configurée pour venir en contact avec le sol.

Dans une variante de réalisation, le procédé comprend une étape de fourniture d'un second chausson principal ayant une partie de semelle comprenant au moins une zone adaptée pour recevoir, au moins en partie, ladite projection, le second chausson principal étant disposé :
- sur le premier chausson auxiliaire à l'étape (v) en sorte que le premier chausson auxiliaire soit disposé, au moins en partie, entre le second chausson principal et le premier chausson principal ; ou
- sur le premier chausson principal à l'étape (v) en sorte que le second chausson principal soit disposé, au moins en partie, entre le premier chausson principal et le premier chausson auxiliaire.

Avantageusement, un second chausson principal est disposé sur le premier chausson principal ce qui permet d'améliorer la résistance à la déchirure et de renforcer la tige. Il est également possible de différencier le premier chausson principal du second chausson principal (notamment selon les fils, le schéma de mailles, l'épaisseur, et ce selon les différentes parties du pied pouvant avoir des dimensions différentes) et donc d'augmenter les variantes de tiges possibles.

Ladite au moins une projection se projette de la face externe de la semelle d'usure.

Dans un mode de réalisation, la partie arrière du second chausson principal a une hauteur supérieure à la hauteur de la partie arrière du premier chausson principal

Ce second chausson principal est solidarisé selon tout ou partie au premier chausson principal, et éventuellement à la semelle d'usure. Lorsque le second chausson principal recouvre ladite zone de jonction entre la semelle d'usure et le premier chausson principal, la résistance au délaminage est encore améliorée.

Le second chausson principal est solidarisé au premier chausson principal par l'intermédiaire du premier chausson auxiliaire lors de sa fusion au moins partielle.

Dans un mode de réalisation, le premier chausson principal comprend une première région, et le second chausson principal comprend une seconde région, la première région ayant une épaisseur (e1) différente de l'épaisseur (e2) de la seconde région, en particulier e1 est inférieur à e2.

Dans un mode de réalisation, la partie d'arrière-pied, la partie latérale et la partie médiale, du premier chausson principal et/ou du second chausson principal, comprennent chacune une première région ayant une épaisseur e3 (mm) supérieure à l'épaisseur e4 (mm) d'une seconde région adjacente à la première région, en particulier les premières régions améliorent le maintien du pied.

Dans un mode de réalisation, la partie de semelle du premier chausson principal a une épaisseur e5 (mm) (dans au moins une région) inférieure à l'épaisseur (dans au moins une région) d'au moins l'une des parties latérale, médiale, d'avant-pied ou d'arrière-pied dudit premier chausson auxiliaire.

Avantageusement, cette disposition améliore l'adhésion de la partie de semelle du second chausson principal avec la semelle d'usure lors de la fusion au moins partielle du premier chausson auxiliaire.

Dans un mode de réalisation, la partie de semelle du premier chausson principal a une épaisseur (dans au moins une région) supérieure à l'épaisseur (dans au moins une région) de la partie de semelle du second chausson principal.

Avantageusement, cette disposition favorise la prise en masse de la semelle d'usure lorsqu'elle est surmoulée sur la partie de semelle ainsi que la résistance au délaminage.

Dans un mode de réalisation, la partie d'avant-pied, la partie latérale et la partie médiale, du premier chausson principal et/ou du second chausson principal, comprennent chacune une troisième région ayant une épaisseur e7 (mm) supérieure à l'épaisseur e8 (mm) d'une quatrième région adjacente à la troisième région, en particulier les troisièmes régions améliorent la résistance à l'usure et protègent le pied lors des contacts avec le ballon par exemple.

Dans un mode de réalisation, ladite zone adaptée du second chausson principal est une poche de construction textile unitaire avec le second chausson principal ou, de préférence, une ouverture traversante, en particulier de construction textile unitaire avec le second chausson principal.

Les projections, notamment les crampons, sont logés dans les poches ou se projettent à travers les ouvertures du second chausson principal, et notamment à travers les ouvertures du premier chausson auxiliaire.

Dans une variante de réalisation, le procédé comprend :
- la fourniture d'un second chausson auxiliaire dans une pièce textile, dont au moins une partie ou l'intégralité est thermofusible et a une température de fusion T2 (°C) ; et
- la disposition à l'étape v) du second chausson auxiliaire sur le second chausson principal et la semelle d'usure en sorte de recouvrir, au moins en partie, le premier chausson principal, le premier chausson auxiliaire, le second chausson principal, la semelle d'usure, et notamment la jonction entre le second chausson principal et la semelle d'usure ;
- la température de chauffage Tc est supérieure ou égale à la température T2 en sorte d'obtenir la fusion de la partie thermofusible ou de l'intégralité du second chausson auxiliaire.

Le second chausson auxiliaire permet encore de renforcer mécaniquement la tige, d'améliorer sa résistance à l'abrasion et sa rigidité, et ce de façon localisée tout en préservant une certaine souplesse puisque la matière fusible est apportée par l'intermédiaire de deux couches séparées (les premier et second chaussons auxiliaires).

Le second chausson auxiliaire améliore également la résistance au délaminage entre la semelle d'usure et le premier chausson principal.

Dans une variante de réalisation, le second chausson auxiliaire est dans une pièce textile unitaire, notamment tricotée.

Dans une variante de réalisation, la partie thermofusible du second chausson auxiliaire représente au moins 50%, encore de préférence au moins 80%, en masse de la masse totale dudit second chausson auxiliaire, préférentiellement au moins 90%, en particulier au moins 95%, plus particulièrement au moins 99% ou environ 100% en masse de la masse totale du second chausson auxiliaire.

Dans une variante de réalisation, le second chausson auxiliaire a une partie de semelle comprenant au moins une zone adaptée pour recevoir ladite projection de la semelle d'usure.

Cette zone adaptée du second chausson auxiliaire est similaire à ladite zone adaptée du premier chausson auxiliaire de sorte que la description de cette dernière s'applique à ladite zone adaptée du second chausson auxiliaire.

Dans une variante, la partie de semelle du premier chausson principal et/ou la partie de semelle du premier chausson auxiliaire, et/ou la partie de semelle du second chausson principal comprend/comprennent chacune une région thermofusible dont la température de fusion est inférieure ou égale à la température de chauffage Tc, la ou lesdites régions thermofusible(s) étant orientée(s) en regard de la semelle d'usure.

La ou les régions thermofusible(s) facilite(nt) l'adhésion de la partie de semelle du chausson avec la semelle d'usure.

Dans une sous-variante, la partie de semelle du premier chausson principal comprend des couches interne et externe opposées, la couche externe étant orientée en regard de la semelle d'usure, la couche externe comprend ladite région thermofusible, et la couche interne, notamment orientée en regard du volume interne du premier chausson principal, comprend au moins une région non thermofusible, en particulier ladite région non thermofusible comprend un ou plusieurs fils élastiques, plus particulièrement dont la température de fusion ou de décomposition est supérieure à Tc.

La couche externe favorise l'adhésion avec la semelle d'usure tandis que la couche interne apporte de la souplesse et du confort puisqu'elle vient en contact avec le pied de l'utilisateur.

Dans une sous-variante, la partie de semelle du second chausson principal comprend des couches interne et externe opposées, la couche interne étant orientée en regard de la semelle d'usure, la couche interne comprend ladite région thermofusible, et la couche externe, notamment orientée vers l'extérieur de la chaussure, en particulier vers le premier chausson auxiliaire, comprend au moins une région non thermofusible, en particulier ladite région non thermofusible comprend un ou plusieurs fils élastiques, plus particulièrement dont la température de fusion ou de décomposition est supérieure à Tc.

Dans un mode de réalisation, la région thermofusible forme au moins 30%, de préférence au moins 40%, encore de préférence au moins 50%, en masse de la masse totale de la couche interne ou externe de la partie de semelle du chausson la comprenant.

Dans un mode de réalisation, la région non thermofusible forme au moins 30%, de préférence au moins 40%, encore de préférence au moins 50%, en masse de la masse totale de la couche interne ou externe de la partie de semelle du chausson la comprenant.

Dans un mode de réalisation, la région thermofusible forme l'intégralité de la couche interne ou externe de la partie de semelle du chausson la comprenant.

Dans un mode de réalisation, la région non thermofusible forme l'intégralité de la couche interne ou externe de la partie de semelle du chausson la comprenant.

Dans une variante de réalisation, la ou les zone(s) adaptée(s) pour recevoir une ou plusieurs projection(s), de la partie de semelle du premier chausson auxiliaire, et/ou de la partie de semelle du second chausson principal, et/ou de la partie de semelle du second chausson auxiliaire, destinée(s) à recevoir au moins en partie la ou les projection(s) de la semelle d'usure est/sont chacune, une ouverture traversante ou une poche.

Dans une variante, la ou les ouvertures traversantes, et/ou la ou les poches, sont formées par au moins l'un des moyens choisis parmi les moyens suivants : lors de la construction textile du premier chausson auxiliaire et/ou du second chausson principal et/ou du seconde chausson auxiliaire ; par emboutissage ; par fusion, notamment lors de l'étape vi) ; et par une combinaison d'au moins deux desdits moyens.

Dans une variante, au moins l'un des chaussons choisi dans la liste consistant en: le premier chausson principal, le premier chausson auxiliaire, le second chausson principal, et le second chausson auxiliaire, en particulier le premier chausson auxiliaire, comprend une région de cou-de pied ayant des bords gauche et droit et en outre une pièce textile provisoire détachable de construction textile unitaire avec ledit au moins un chausson choisi, ladite pièce textile provisoire détachable comprenant des bords gauche et droit en liaison, notamment solidarisés, respectivement avec les bords gauche et droit de ladite région de cou-de-pied, notamment par l'intermédiaire d'au moins une pluralité de zones de liaison sécables.

La pièce textile provisoire détachable aide à la mise place des chaussons les uns par rapport aux autres, en particulier permet de maintenir les bords gauche et droit de la région de cou-de-pied suffisamment rapprochés lors de l'étape vi). Cette pièce textile provisoire permet avantageusement d'assurer la reproductibilité du positionnement des chaussons entre-eux lors de leur superposition.

Après l'étape vi), la pièce textile provisoire est séparé de la chaussure, notamment en coupant les zones de liaison sécables.

On comprend dans le présent texte par détachable que la pièce textile provisoire peut être détachée de la chaussure sans la détériorer.

La pièce textile provisoire détachable peut comprendre un ou plusieurs fils élastique(s) en sorte d'être élastique dans au moins une direction, par exemple dans le sens des colonnes de mailles et/ou dans le sens des rangées de mailles.

La pièce textile provisoire est de préférence dans un ou plusieurs matériau(x) dont la ou les température(s) de fusion et/ou de décomposition est/sont supérieure(s) à Tc, en particulier en sorte de n'être pas thermofondue à l'issue de l'étape vi).

La pièce textile provisoire peut comprendre des fils non élastiques.

Dans une variante, le premier chausson principal et/ou le second chausson principal comprend/comprennent moins de 60%, de préférence moins de 50%, encore de préférence moins de 30%, préférentiellement moins de 10%, plus préférentiellement moins de 5%, et/ou au moins 10%, en masse de sa/leurs masse(s) totale(s) d'un ou de plusieurs composé(s) thermofusible(s), notamment dont la ou les températures de fusion est/sont inférieur(s) ou égale(s) à Tc.

Dans un mode de réalisation, le premier chausson principal et/ou le second chausson principal ne comprend/comprennent pas un ou plusieurs composé(s) thermofusible(s).

Dans une variante, le premier chausson principal et, le premier chausson auxiliaire ou le second chausson principal, sont dans une pièce textile unitaire.

Dans une variante de réalisation, le premier chausson principal est dans une pièce textile unitaire comprenant également un chausson additionnel, et le premier chausson principal et le chausson additionnel sont solidarisés au niveau de leurs ouvertures d'introduction du pied.

Dans une variante de réalisation, le chausson additionnel est replié dans le premier chausson principal (c'est-à-dire à l'intérieur du volume intérieur de ce dernier) après l'étape (vi) en sorte de former une chaussette de confort.

Dans une variante de réalisation, le chausson additionnel est replié sur le premier chausson principal, et forme le premier chausson auxiliaire ou le second chausson principal ou le second chausson auxiliaire.

Dans ce cas, le premier chausson principal est de construction textile unitaire avec l'un des chaussons précités, notamment en étant en liaison au niveau de leurs ouvertures d'introduction.

Dans une variante de réalisation, la semelle d'usure comprend plusieurs projections se projetant de sa face externe, en particulier lesdites projections sont des crampons.

Dans une variante de réalisation, le premier chausson principal, et éventuellement le second chausson principal, et/ou le chausson additionnel, comprend/comprennent au moins 80% (de préférence sensiblement 100%) en masse de leur(s) masse(s) totale(s) d'un ou plusieurs matériau(x) dont la ou les température(s) de fusion ou de dégradation est/sont supérieure(s) à Tc.

Dans une variante de réalisation, la partie de semelle du premier chausson principal, en particulier la face interne de la partie de semelle du premier chausson principal, comprend au moins une première région de construction textile unitaire avec le premier chausson principal, et l'étape de solidarisation (iii) de la semelle d'usure comprend une étape d'injection ou d'extrusion (sur)moulage de la semelle d'usure sur la partie de semelle du premier chausson principal configurée en sorte de combler la première région et former un premier organe d'attache et/ou un élément amortissant.

La première région peut être disposée au niveau de la zone de talon ou de la zone d'avant-pied de la partie de semelle du premier chausson principal.

L'élément amortissant peut être configuré en sorte de former un premier organe d'attache également.

La chaussette additionnelle comprend un premier organe d'attache complémentaire configuré pour coopérer, de manière amovible notamment, avec le premier organe d'attache pour leur solidarisation. Le premier organe d'attache complémentaire est disposé sur la zone de talon de la partie de semelle de la chaussette additionnelle.

Dans une variante de réalisation, le procédé comprend une étape d'injection ou d'extrusion moulage au-cours de laquelle au moins un renfort est, injecté ou extrudé, moulé, sur le premier chausson principal et/ou sur le second chausson principal.

Dans une variante, l'ensemble comprend une première région à proximité de l'ouverture d'introduction du pied s'étendant vers la partie d'avant-pied dans laquelle le premier chausson principal et le second chausson principal sont superposés et substantiellement non solidarisés.

Le présent texte décrit, selon un deuxième aspect, une chaussure notamment pour la pratique du sport, en particulier de l'un des sports choisis parmi : le football, la randonnée, l'athlétisme, le rugby, et le cyclisme, plus particulièrement le football ou la randonnée, notamment obtenue par la mise en œuvre du procédé en référence à l'une quelconque des variantes de réalisation définies ci-dessus, comprenant :
- un premier chausson principal dans une pièce textile ayant une partie de semelle,
- une semelle d'usure solidarisée à la partie de semelle du premier chausson principal et comprenant selon sa face externe au moins une projection, en particulier au moins deux crampons, et
- un premier chausson auxiliaire, au moins en partie, notamment intégralement, thermofusible, dans une pièce textile, recouvrant, au moins en partie, le premier chausson principal, la semelle d'usure, et la jonction entre le premier chausson principal et la semelle d'usure, au moins une partie ou l'intégralité du premier chausson auxiliaire thermofusible étant fondue et adhère au premier chausson principal et à la semelle d'usure.

Ledit revêtement thermofusible recouvre au moins en partie, le premier chausson principal, la semelle d'usure, et la jonction entre ces derniers, en particulier au moins en partie la face externe de la semelle d'usure.

Dans une variante, la semelle d'usure comprend une ou plusieurs projections, notamment des crampons se projetant de sa face externe, et la partie de semelle du premier chausson auxiliaire comprend une ou plusieurs zone(s) adaptée(s) pour recevoir chacune, au moins en partie, une projection.

Dans une variante, ladite chaussure comprend un élément de renfort postérieur de construction textile unitaire avec le premier chausson principal ou le premier chausson auxiliaire, ou encore le second chausson principal ou auxiliaire, ledit élément de renfort postérieur comprenant des fils thermofusibles fondus, en particulier est constitué intégralement de fils thermofusibles fondus.

De préférence, l'élément de renfort postérieur débouche dans le volume interne de réception du pied du premier chausson principal.

L'élément de renfort postérieur s'étend au moins partiellement dans les partie arrière, latérale et médiale du premier chausson principal.

L'élément de renfort principal a une forme en C ouvert sur la partie avant du premier chausson principal.

L'élément de renfort principal est de préférence un logement textile, notamment une poche textile, en particulier se projetant de la zone d'introduction du pied du premier chausson principal.

De préférence, la chaussure comprend un élément déformable élastiquement, notamment une mousse, disposée dans le logement textile de l'élément de renfort principal.

L'élément déformable élastiquement est déformable de manière réversible, c'est-à-dire qu'il peut être déformé et/ou comprimé et récupérer sa forme initiale sensiblement sans déformation résiduelle, ou avec une déformation résiduelle inférieure à 5% par rapport à ses dimensions initiales.

De préférence, l'élément déformable élastiquement comprend des portions arrière, latérale et médiale.

De préférence, l'épaisseur de la portion arrière (par exemple de l'ordre de 1 cm) de l'élément déformable élastiquement est décroissante vers les parties médiale et latérale.

Ainsi, la partie arrière, et notamment les parties latérale et médiale, du premier chausson principal est/sont disposée(s), au moins partiellement, entre l'élément de renfort postérieure, et la partie arrière, et notamment les parties latérale et médiale, du premier chausson auxiliaire.

Avantageusement, l'élément de renfort postérieur est fabriqué lors du tricotage ou tissage du premier chausson principal.

Avant l'étape vi), l'élément de renfort postérieur comprend au moins une ouverture, notamment au moins deux ouvertures, permettant d'accéder à son volume intérieur pour y disposer l'élément élastiquement déformable.

De préférence, l'élément élastiquement déformable a une température de fusion ou de décomposition supérieure à Tc.

Dans une variante, l'élément de renfort postérieur débouche dans le volume interne de réception du pied de la chaussure, et l'élément de renfort postérieur forme un logement délimitant un volume intérieur recevant un élément déformable élastiquement.

Dans une variante de réalisation, la semelle d'usure comprend des crampons se projetant de sa face externe, et la partie de semelle du premier chausson auxiliaire comprend des trous au travers desquelles se projettent les crampons.

Dans une variante, la chaussure comprend un second chausson principal disposé, au moins en partie, sur le premier chausson principal, le premier chausson auxiliaire et la semelle d'usure, le premier chausson principal est dans une pièce textile et comprend dans sa partie d'avantpied, notamment la zone de cou-de-pied, au moins une boucle de laçage de construction textile unitaire avec la pièce textile du premier chausson principal. Le second chausson principal comprend dans sa partie d'avantpied au moins une ouverture de laçage configurée pour permettre le passage de la boucle de laçage à travers l'ouverture de laçage en sorte de se projeter à l'extérieur de l'ouverture de laçage.

Dans une variante, la chaussure comprend un second chausson principal dans une pièce textile disposé, au moins en partie, sur le premier chausson principal, le premier chausson auxiliaire et la semelle d'usure, et le second chausson principal comprend dans sa région d'avant-pied au moins une boucle de laçage de construction textile unitaire avec la pièce textile formant le second chausson principal.

Les modes de réalisation décrits ci-après en référence aux boucles de laçage s'appliquent aux deux variantes de réalisation précédentes.

Dans un mode de réalisation, la boucle de laçage est délimitée par deux ouvertures, notamment de construction textile unitaire, en particulier tricotée, disposées dans la partie d'avant-pied du/des premier et/ou second chausson(s) principal/aux.

La boucle de laçage est notamment équivalente au pont tricoté décrit ci-après en référence aux exemples de réalisation.

En particulier, la zone de cou-de-pied du premier et/ou du second chausson(s) principal/aux comprennent des premier et seconds ensembles d'ouvertures traversantes de laçage. Chaque premier et second ensemble d'ouvertures traversantes de laçage comprend plusieurs, par exemple entre trois et six, jeux de deux ouvertures, les deux ouvertures de chaque jeu étant séparées par une portion tricotée formant des premiers et des seconds ponts. Les premiers ponts et les seconds ponts sont sensiblement alignés par jeux d'ouvertures selon une direction transversale T sensiblement perpendiculaire à l'axe longitudinale L du premier/second chausson(s) principal/aux.

Dans un mode de réalisation, la boucle de laçage est formée par un fil tricoté tramé, ladite boucle se projetant de la face externe de la partie d'avant-pied du premier chausson principal.

Les variantes, modes de réalisation et définitions de l'invention en référence à un premier aspect peuvent être combinés indépendamment les uns des autres avec les variantes, modes de réalisation et définitions de l'invention en référence à un second aspect.

### Brève description des dessins

L'invention et ses avantages seront mieux compris à la lecture de la description détaillée des modes de réalisation particuliers, pris à titre d'exemples nullement limitatifs et illustrés par les dessins annexés sur lesquels :
- la figure **1** est une représentation schématique vue de côté du premier chausson principal d'un premier exemple de chaussure selon l'invention ;
- la figure **2** est une représentation schématique vue de dessous du premier chausson principal représenté à la figure **1** ;
- la figure **3** une représentation schématique en coupe transversale du premier exemple de chaussure selon l'invention comprenant le premier chausson principal représenté aux figures **1** et **2** ;
- la figure **4** est une représentation vue de côté d'une partie du premier exemple de chaussure selon l'invention ;
- la figure **5** est une représentation schématique en coupe transversale d'un second exemple de chaussure selon l'invention ;
- la figure **6** est une représentation schématique vue de côté du second exemple de chaussure représentée à la figure **5** ;
- les figures **7** et **8** représentent de manière schématique les étapes (ii), (iii) et l'étape (v) du procédé selon l'invention pour la fabrication du premier exemple de chaussure représentée à la figure **3** ;
- la figure **9** est une représentation schématique en coupe transversale d'un troisième exemple de chaussure selon l'invention ;
- la figure **10** est une représentation schématique vue de côté, d'une variante du premier chausson principal solidarisé à la semelle d'usure représenté à la figure **4** ;
- La figure **11** est une représentation schématique vue de dessus d'un quatrième exemple de chaussure comprenant une pièce textile provisoire détachable ;
- La figure **12** est une représentation schématique vue de dessus d'un exemple de premier chausson principal.

### Description détaillée de l'invention

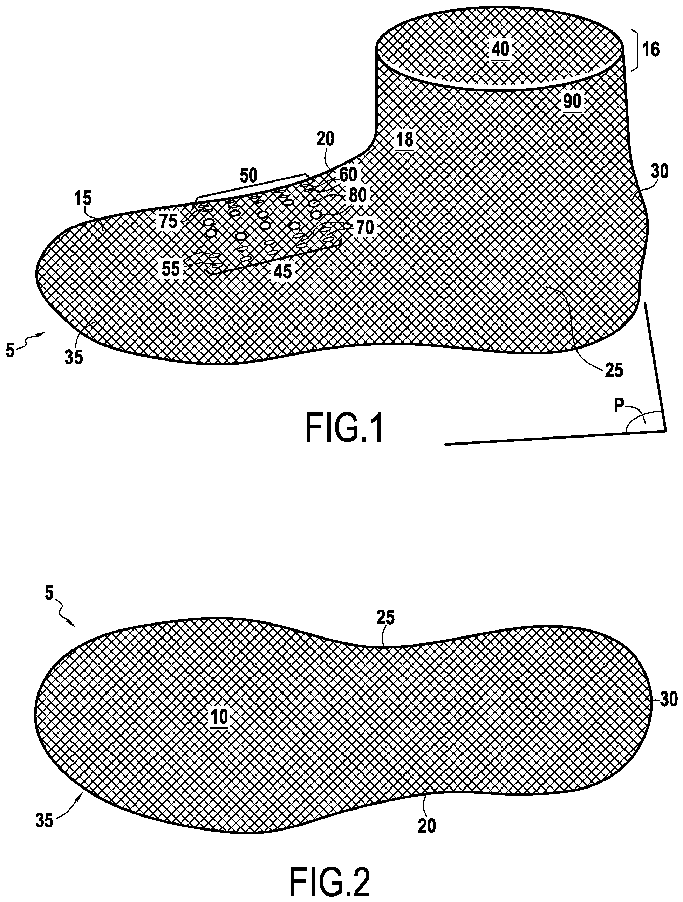

Le premier chausson principal **5** représenté sur les figure **1** et **2** comprend une partie de semelle **10,** une partie d'avant-pied **15,** une partie latérale **20,** une partie médiale **25** et une partie arrière **30.** Le premier chausson principal **5** est en particulier dans une enveloppe textile tricotée unitaire **35,** notamment à mailles cueillies, ayant un volume interne **40** configuré pour recevoir le pied de l'utilisateur. Les parties arrière **30,** latérale **20,** médiale **25** et d'avant-pied **15** se projettent à la verticale du plan P comprenant la partie de semelle **10.** Les parties latérale **20** et médiale **25** sont disposées entre et en liaison avec les parties arrière **30** et d'avant-pied **15.**

La partie d'avant-pied **15** comprend dans la zone de cou-de-pied **18** des premier et second ensembles d'ouvertures traversantes de laçage **45, 50.** Chaque premier et second ensemble d'ouvertures traversantes de laçage **45**, **50** comprend cinq jeux de deux ouvertures **55**,**60**, les deux ouvertures **57**, **58** ; **67**, **68** de chaque jeux **55**, **60** étant séparées par une portion tricotée formant des premiers et de seconds pont **70**, **75.** Les premiers ponts **70** et les seconds ponts **75** sont sensiblement alignés par jeux d'ouvertures **55**, **60** selon une direction transversale T sensiblement perpendiculaire à l'axe longitudinale L du premier chausson principal **15**.

La partie d'avant-pied **15** comprend également dans la zone de cou-de-pied **18**, un ensemble d'ouvertures traversantes d'aération **80**, notamment disposé entre les deux ensembles d'ouverture traversantes de laçage **45**,**50.** L'ensemble d'ouvertures d'aération **80** est disposé selon une zone du premier chausson principal **15** sensiblement centrée entre les parties médiale **25** et latérale **20.** L'ensemble des ouvertures d'aération **80** comprend par exemple dix ouvertures traversantes.

Le premier chausson principal **5** représenté à la figure **1** comprend au niveau de la région pour l'introduction du pied **16**, une zone en forme de collier fermé **90,** dans un schéma de mailles du type côte n X p, n et p étant des nombres entiers différents de 0 et inférieurs ou égaux à 5, par exemple des côtes 1x1, ou 1x2. Cette zone **90** forme ainsi une bordure souple et élastique facilitant l'introduction du pied.

Le premier chausson principal **5** est solidarisé à une semelle d'usure **100** comprenant un ensemble de crampons **105**, en particulier agencé pour la pratique du football, se projetant de sa face externe **101.**

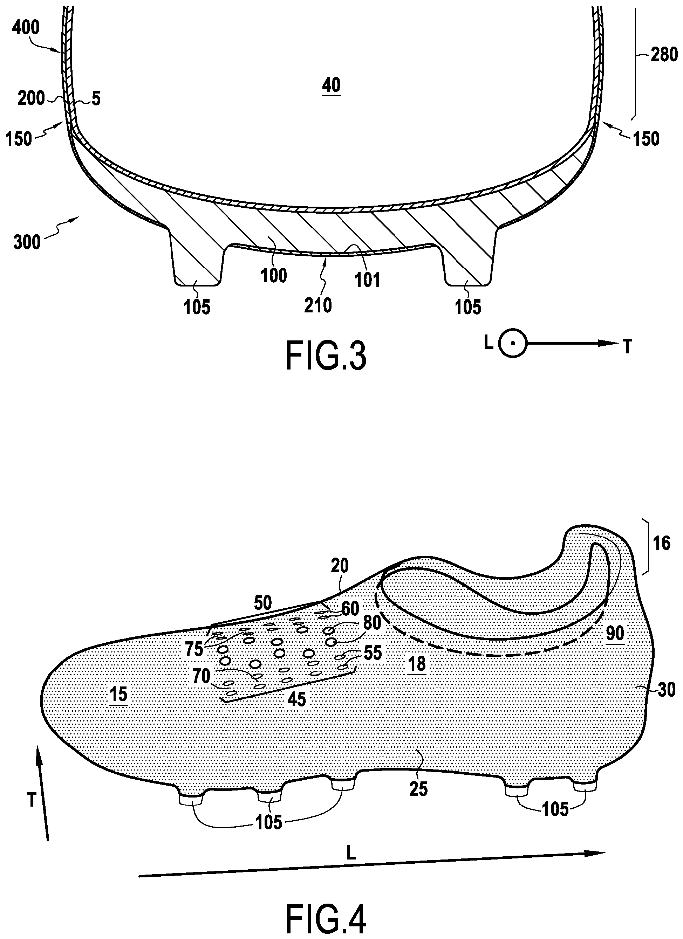

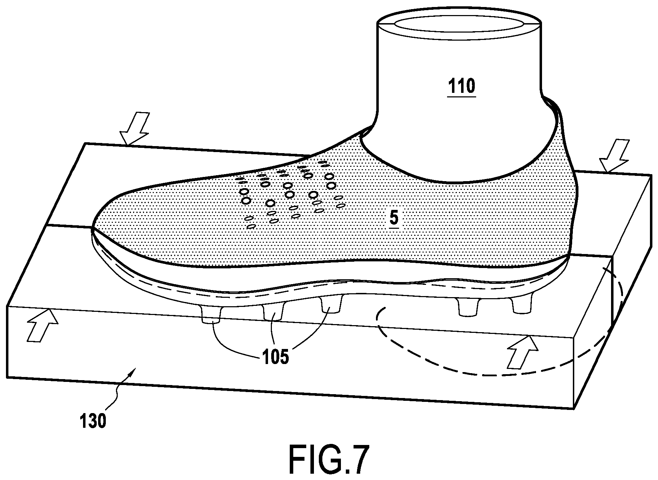

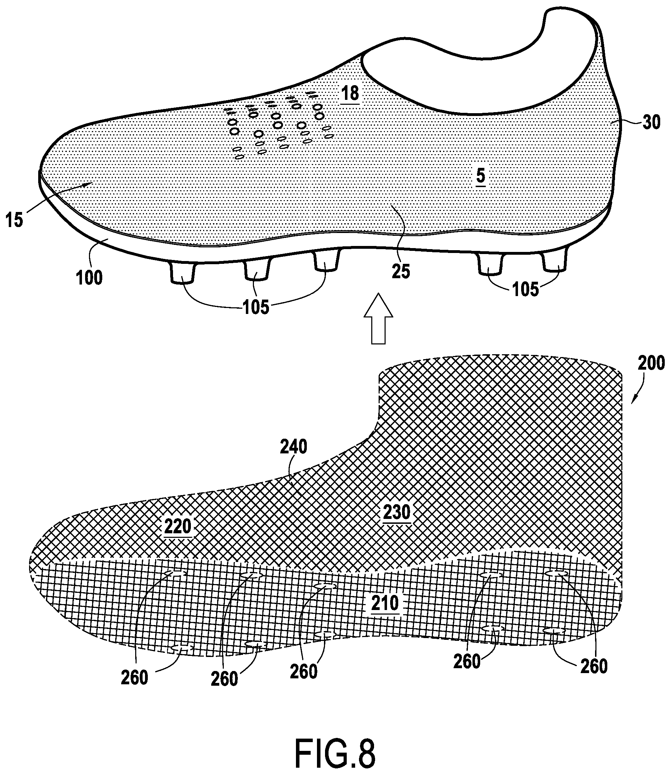

Tel que cela est illustré sur les figures **7** et **8**, le premier chausson principal **5** est disposé sur une préforme rigide **110** à la forme d'un pied. Il est possible de disposer un lacet dans les premier et second ensembles d'ouvertures traversantes de laçage **45**, **50** afin de faciliter le positionnement et le plaquage du premier chausson principal **5** sur la préforme **110.** Puis, la partie de semelle **10** du premier chausson principal 5 est placée dans un contre-moule **130** (en une ou deux parties) en sorte que la face externe de la partie de semelle **10** se projette dans le volume intérieur du contre-moule dans lequel est injectée une composition polymère pour la fabrication de la semelle d'usure **100.** La préforme **110** est retirée du moule, le premier chausson principal **5** et la semelle d'usure **100** comprenant des crampons **105** sont ainsi solidarisés (voir figure 4). Puis, un premier chausson auxiliaire **200** dans une pièce textile dont au moins une partie ou l'intégralité est thermofusible et a une température de fusion T1 (°C) est disposé sur le premier chausson principal **5** et la semelle d'usure **100** en sorte de recouvrir, au moins en partie, le premier chausson principal **5**, la semelle d'usure **100,** et la jonction **150** entre le premier chausson principal **5** et la semelle d'usure **100.** Le premier chausson auxiliaire **200** comprend des parties de semelle **210,** d'avant-pied **220,** médiale **230,** latérale **240** et arrière **250,** dont les parties d'avant-pied **220,** médiale **230,** latérale **240** et arrière **250** se retrouvent en tout ou partie respectivement contre les parties d'avant-pied, médiale, latérale et arrière du premier chausson principal **5**. La partie de semelle **210** du premier chausson auxiliaire **200** comprend un ensemble de zones adaptées **260** pour recevoir les crampons **105**, lesdites zones **260** sont en particulier des ouvertures traversantes desquelles se projettent les crampons **105.** Dans cet exemple précis, le premier chausson auxiliaire **200** est dans une pièce textile intégralement fusible ayant une température de fusion T1. Puis, l'ensemble formant la tige **280** comprenant le premier chausson principal **5** et le premier chausson auxiliaire **200**, est soumis à une température de chauffage Tc supérieure ou égale à la température T1 en sorte d'obtenir la fusion intégrale du premier chausson auxiliaire **200.** De préférence, un système de chauffage est agencé à l'intérieur de la préforme **110.** La chaussure **300** obtenue, représentée en partie en coupe transversal à la figure **3** présente une résistance à la délamination améliorée entre la semelle d'usure **100** et le premier chausson principal **5** puisque la jonction **150** est recouverte d'un film polymère **400** laissant apparaître en reliefs l'aspect textile du premier chausson principal **5**. Il est également possible, de manière complémentaire, de disposer l'ensemble formant tige **280** dans un moule dont la face interne est gravée en sorte d'impartir un ou plusieurs motif(s) déterminé(s) au film polymère **400** selon les régions de l'ensemble formant tige **280** de la chaussure **300.**

Le premier chausson principal **5** est dans une enveloppe textile tricotée à mailles cueillies en trois dimensions en sortie d'un métier à tricoter circulaire ou rectiligne, notamment rectiligne. Dans cet exemple précis, le premier chausson principal **5** est tricoté avec des fils multi filamentaires en polyéthylène téréphtalate de 500 dtex pour 204 filaments environ. La masse du premier chausson principal **5** est comprise entre 100 g/m² et 250 g/m², notamment de l'ordre de 170 g/m².

Le premier chausson auxiliaire **200** est dans une pièce textile tricotée à mailles cueillies (en trois dimensions) sur un métier à tricoter circulaire à partir de fils mono filamentaires mono composant, notamment en polyuréthane, dont le diamètre est compris entre 0,10 mm et 2 mm, notamment de l'ordre de 1 mm. Le premier chausson auxiliaire **200** peut comprendre des zones dont la densité de fils varie en sorte de créer des zones ayant une épaisseur supérieure à celles d'autres zones et donc au final un film **400** ayant des zones d'épaisseur plus importantes.

La masse du premier chausson auxiliaire **200** est comprise entre 30g/m² et 200 g/m², notamment de l'ordre de 50g/m².

La semelle d'usure **100,** y compris les crampons **105,** a une masse comprise entre 100 g/m² et 400 g/m². La masse finale de la chaussure **300** dépend enfin de la taille de la chaussure, elle est en particulier comprise entre 200 et 250 g/m² (y compris les lacets), notamment pour une taille 43 européenne.

La semelle d'usure **100** est dans cet exemple dans un matériau élastomère, notamment en TPU.

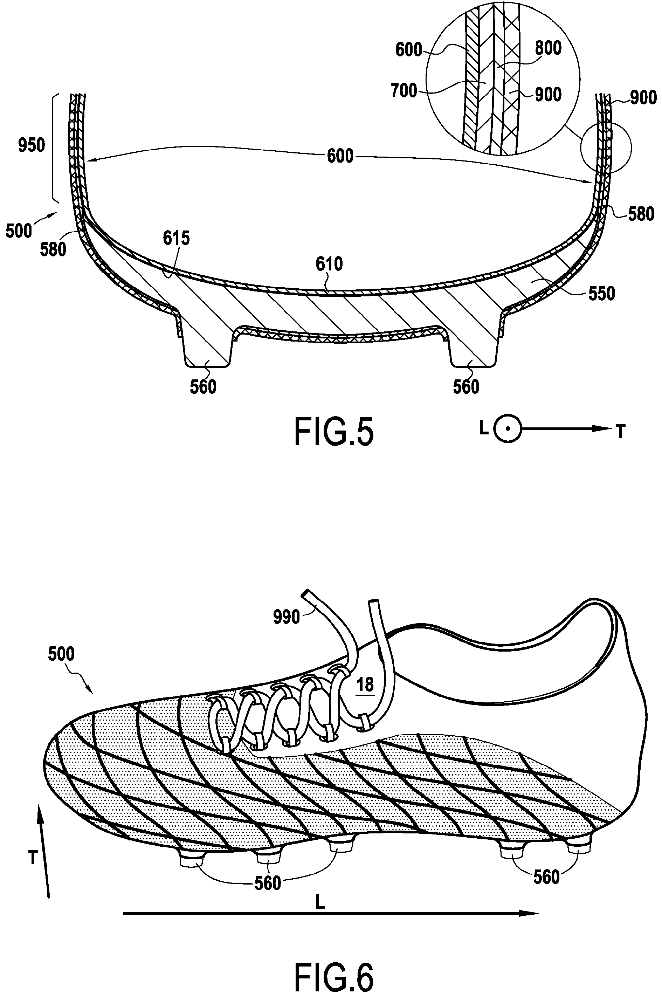

La figure **5** représente en coupe un autre exemple de chaussure **500** selon l'invention. La chaussure **500** comprend un premier chausson principal **600** de préférence dont la température de fusion ou de décomposition est supérieure à la température Tc, un premier chausson auxiliaire **700** de préférence intégralement thermofusible (T1 inférieure à Tc), un second chausson principal **800** de préférence dont la température de fusion ou de décomposition est supérieure à la température Tc, un second chausson auxiliaire **900** de préférence intégralement thermofusible (T2 inférieure à Tc) et une semelle d'usure **550** comprenant des crampons **560.** Les premier et second chaussons principaux **600, 800** et les premier et second chaussons auxiliaires **700**, **900** comprennent chacun des parties arrière, de semelle, d'avant-pied, médiale et latérale.

La semelle d'usure **550** est de préférence surmoulée, notamment par injection tel que décrit en référence aux figures **7** et **8**, sur la face externe **615** de la partie de semelle **610** du premier chausson principal **600.**

Le premier chausson principal **600** solidarisé à la semelle d'usure **550** et disposé sur une préforme rigide (tel que cela a été décrit ci-dessus en référence à la chaussure **300**), et éventuellement chauffée, est recouvert d'un premier chausson auxiliaire **700**, d'un second chausson principal **800** puis d'un deuxième chausson auxiliaire **900** déterminant un ensemble formant une tige **950.** Les parties de semelle des premier et second chaussons auxiliaires **700**, **900** et du second chausson principal comprennent chacune un ensemble de zones adaptées pour recevoir les crampons **560,** en particulier des ouvertures traversantes à travers lesquelles les crampons se projettent. La jonction **580** entre la semelle d'usure **550** et le premier chausson principal **600** est ainsi recouverte intégralement par deux couches de films polymère issues des premier et second chaussons auxiliaires **700, 900** et l'enveloppe textile du second chausson principal **800** améliorant ainsi encore la résistance au délaminage.

Le premier chausson principal **600** comprend dans cet exemple précis des premier et seconds ensembles d'ouvertures traversantes pour former des boucles de laçage similaires à ceux **45,50** supportés par le premier chausson principal **5** (de par leurs structures et leurs placements) mais ne comprend pas d'ouvertures d'aération **80.** Le second chausson principal **800** comprend des ouvertures d'aération similaires à celles **80** du premier chausson principal **5** (de par leurs structures et leurs placements).

Il est également possible (non représenté) que le second chausson principal **800** comprenne également lesdits premier et second ensemble d'ouvertures traversantes pour former des boucles de laçage, lesquels premier et second ensembles ne sont alors pas présents sur le premier chausson principal **600.**

Par ailleurs, dans ce mode de réalisation, le second chausson principal **800,** le second chausson auxiliaire **900,** et le premier chausson auxiliaire comprennent chacun dans leur région d'avant-pied au moins une ouverture de laçage, en particulier deux ensembles d'ouvertures de laçage disposées de part et d'autre de la zone de cou-de-pied et agencés en sorte de coopérer avec les boucles de laçage du premier chausson principal en sorte de se projeter à travers les ouvertures de laçage. Un lacet **990** est passé dans les ouvertures de laçage, tel que cela est visible sur la figure **6****.** La jonction **580** entre la semelle d'usure **550** et le premier chausson principal **600** est invisible. De préférence, à l'exception des crampons **560,** la semelle d'usure **550** n'est pas visible.

Les premier et second chaussons principaux **600, 800** peuvent être identiques ou différents.

Les premier et second chaussons auxiliaires **700, 900** peuvent être identiques ou différents, et notamment similaires au premier chausson auxiliaire **200.**

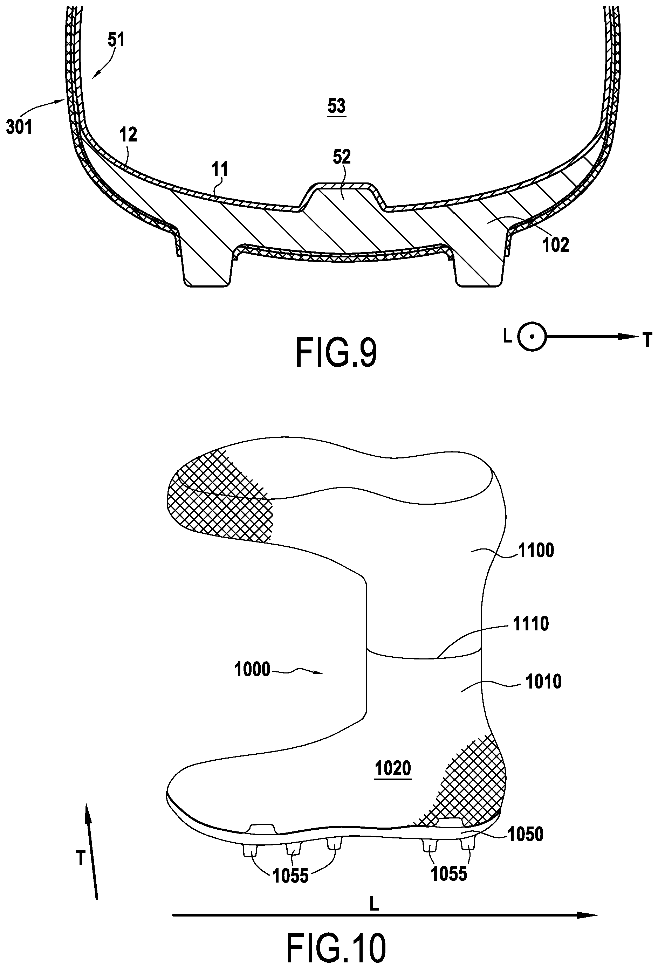

La figure **9** représente une chaussure **301,** qui est une variante de la chaussure **300,** dans laquelle le premier chausson principal **51** comprend une première région **52,** notamment formant logement, tricotée intégralement avec ce dernier **51** et se projetant de la face interne **12** de la partie de semelle **11** dans le volume intérieur **53** du premier chausson principal **51.** Lors de la fabrication de la semelle d'usure **102** par injection moulage par exemple, la composition polymère injectée destinée à former la semelle d'usure **102** flue dans le logement **52** tricoté et comble ledit logement **52** formant ainsi un élément amortissant et/ou un organe d'attache.

Le premier chausson principal **51** peut comprendre une première région tricotée **52** disposée dans la région de talon de la partie de semelle **11** et/ou une première région tricotée **52** disposée dans la région d'avantpied de la partie de semelle **11.** Ledit organe d'attache peut coopérer avec un organe d'attache complémentaire supporté par une semelle de propreté par exemple pour leur solidarisation amovible.

La figure **10** représente un premier chausson principal **1000** en liaison avec un chausson additionnel **1100** au niveau de leurs ouvertures d'introduction **1010, 1110** du pied respectives.

Le premier chausson principal **1000** est représenté solidarisé à la semelle d'usure **1050** pourvue de crampons **1055.** Le chausson additionnel **1100** peut ainsi être replié dans le volume intérieur **1020** du premier chausson principal **1000** et forme ainsi un chausson d'accueil. Le chausson additionnel **1100** peut faire office également de premier ou second chausson auxiliaire ou encore de second chausson principal au sens de la présente invention. Dans ce dernier, il est nécessaire de disposer un premier chausson auxiliaire entre le premier chausson principal **1000** et le second chausson principal formé du chausson additionnel **1100.**

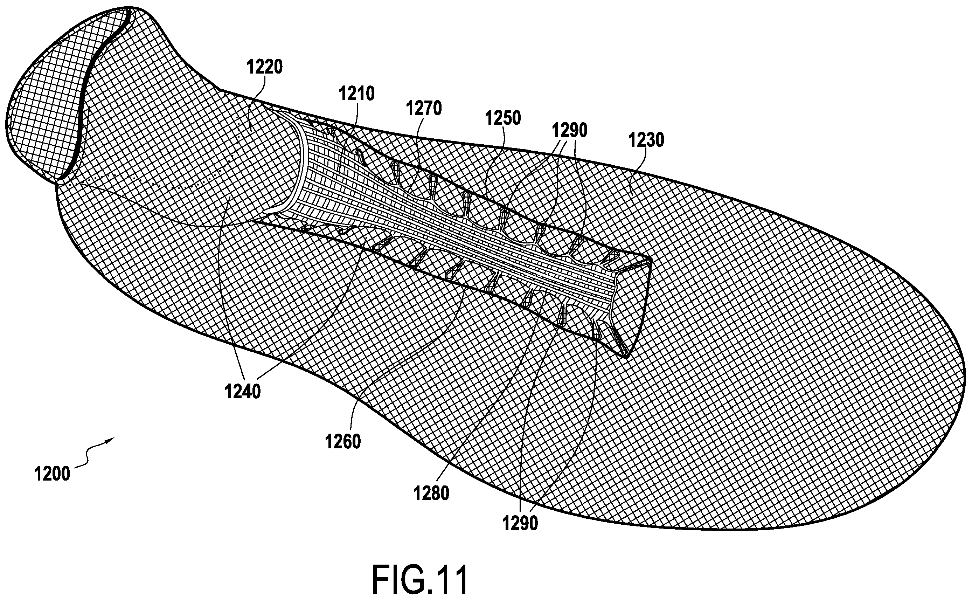

La chaussure **1200** représentée sur la figure **11** comprend une pièce textile provisoire détachable **1210** de construction textile unitaire avec le premier chausson auxiliaire **1230,** qui est totalement fondu et forme ainsi un revêtement externe thermofondu recouvrant au moins partiellement un second chausson principal **1220.** La pièce provisoire **1210** n'est pas thermofusible, et donc telle que visible sur la figure **11** après l'étape vi). Le second chausson principal **1220** comprend une région de cou-de-pied **1240** ayant des bords gauche **1250** et droit **1260.** La pièce textile provisoire détachable **1210,** notamment tricotées, comprend des bords gauche **1270** et droit **1280** en liaison, notamment solidarisés, respectivement avec les bords gauche **1250** et droit **1260** de ladite région de cou-de-pied **1240,** notamment par l'intermédiaire d'au moins une pluralité de zones de liaison sécables **1290,** en particulier des boucles de liaison textiles, notamment tricotées.

La pièce textile provisoire détachable **1210,** notamment sécable, aide à la mise place des chaussons les uns par rapport aux autres, en particulier permet de maintenir les bords gauche et droit de la région de cou-de-pied **1240** suffisamment rapprochés lors de l'étape vi).
Après l'étape vi), la pièce textile provisoire **1210** est séparée de la chaussure **1200,** notamment en coupant les zones de liaison sécables **1290.**

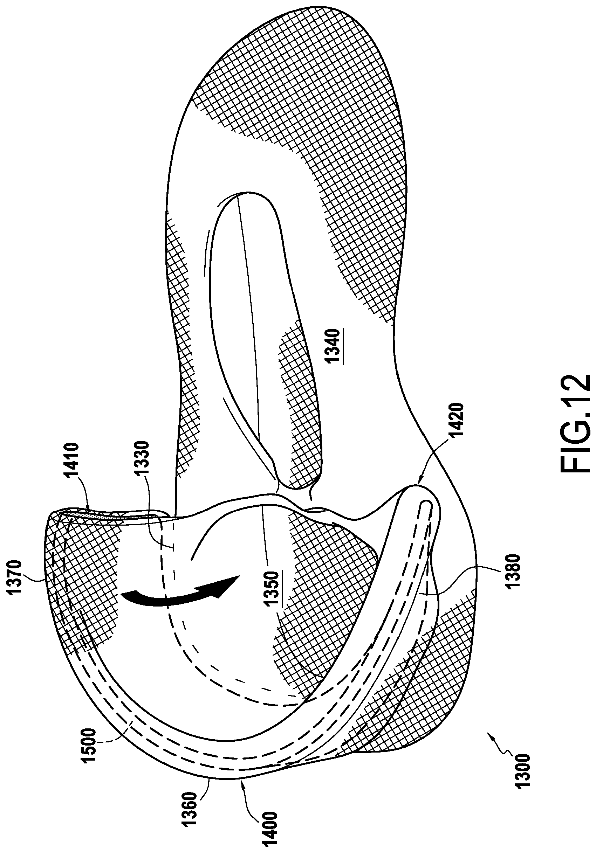

La figure **12** représente une variante du premier chausson principal permettant de former un élément de renfort postérieur. Le premier chausson principal **1300,** représenté seul à la figure **12** et avant son assemblage avec d'autres chaussons, comprend ainsi un élément de renfort postérieur **1400** de construction textile unitaire avec le premier chausson principal **1300,** et constitué partiellement ou intégralement, de préférence intégralement, de fils thermofusibles dont la ou les température(s) de fusion est/sont inférieure(s) à Tc. Ainsi, après l'étape vi), l'élément de renfort postérieur textile **1400** est totalement ou partiellement fondu.

L'élément de renfort postérieur **1400** est représenté sur la figure **12** avant son repliement dans le volume interne **1350** de réception du pied du premier chausson principal **1300.** Lors de la superposition du premier chausson principal **1300** avec un ou plusieurs autres chaussons selon l'invention pour former un ensemble subissant une étape de thermocompression à l'étape vi), l'élément de renfort postérieur **1400** est replié selon le sens de la flèche représentée à la figure **12** en sorte de se retrouver sur la chaussure finie comme débouchant directement dans le volume intérieur de réception du pied de la chaussure. Avantageusement, l'élément de renfort postérieur **1400** est fabriqué lors du tricotage ou tissage du premier chausson principal **1300.**

L'élément de renfort postérieur **1400** s'étend au moins partiellement dans les parties arrière **1360,** latérale **1370** et médiale **1380** du premier chausson principal **1300.**

Dans cet exemple précis, l'élément de renfort principal **1300** a une forme en C ouvert sur la partie avant **1340** du premier chausson principal **1300.**

L'élément de renfort principal **1400** est de préférence un logement textile, notamment une poche textile, en particulier se projetant de la zone d'introduction du pied **1330** du premier chausson principal **1300.**

De préférence, la chaussure comprend un élément déformable élastiquement **1500,** notamment une mousse, disposée dans le volume intérieur du logement textile de l'élément de renfort postérieur **1400.**

L'élément élastiquement déformable peut être déformée et/ou comprimée et récupérer sa forme initiale sensiblement sans déformation résiduelle, ou avec une déformation résiduelle inférieure à 5% par rapport à ses dimensions initiales.

De préférence, l'élément déformable élastiquement comprend des portions arrière, latérale et médiale.

Avant l'étape vi), l'élément de renfort postérieur **1400** comprend de préférence au moins une ouverture **1410,** notamment au moins deux ouvertures **1410,1420,** permettant d'accéder à son volume intérieur pour y disposer l'élément élastiquement déformable **1500.**

L'élément de renfort postérieur **1400** subit l'étape vi) dans un état replié contre, au moins partiellement, les parties arrière, latérale et médiale du premier chausson principal **1300,** de sorte qu'il se retrouve solidarisé par collage à ces parties du premier chausson principal **1300.** Les ouvertures **1410** et **1420** sont alors obturées par les fils thermofusibles fondus. L'élément élastiquement déformable est ainsi parfaitement maintenu dans le logement de l'élément de renfort postérieur **1400.**

## Revendications

1. Procédé de fabrication d'une chaussure (300 ; 500 ; 1200) comprenant les étapes suivantes :
(i) fournir au moins un premier chausson principal (5 ; 600) dans une pièce textile, ayant une partie de semelle (10 ; 610) ;
(ii) placer au moins le premier chausson principal (5 ; 600) sur une préforme ;
(iii) solidariser une semelle d'usure (100 ; 550) à la partie de semelle (10 ; 610) du premier chausson principal (5 ; 600) ;
(iv) fournir au moins un premier chausson auxiliaire (200 ; 700) dans une pièce textile, dont au moins une partie ou l'intégralité est thermofusible et a une température de fusion T1 (°C) ;
(v) disposer le premier chausson auxiliaire (200 ; 700) sur le premier chausson principal (5 ; 600) et la semelle d'usure (100 ; 550) en sorte de recouvrir, au moins en partie, le premier chausson principal (5 ; 600), la semelle d'usure (100 ; 550), et la jonction (150 ; 580) entre le premier chausson principal (100 ; 550) et la semelle d'usure (100 ; 550) ;
(vi) soumettre l'ensemble comprenant le premier chausson auxiliaire (200 ; 700), le premier chausson principal (5 ; 600), et la semelle d'usure (100 ; 550), disposé sur la préforme (110), à une température de chauffage Tc supérieure ou égale à la température T1 en sorte d'obtenir la fusion de la partie thermofusible ou de l'intégralité du premier chausson auxiliaire (200 ; 700) ;
(vii) retirer l'ensemble de la préforme (110) et récupérer la chaussure, et où lors de l'étape (vi), l'ensemble disposé sur la préforme est placé, au moins en partie, dans un contre-moule.

2. Procédé de fabrication d'une chaussure (300 ; 500) selon la revendication 1, **caractérisé en ce que** le premier chausson auxiliaire (200 ; 700) est dans une pièce textile unitaire, notamment tricotée.

3. Procédé de fabrication d'une chaussure (300 ; 500) selon l'une ou l'autre des revendications 1 et 2, **caractérisé en ce que** la partie thermofusible du premier chausson auxiliaire (200 ; 700) représente au moins 50%, encore de préférence au moins 80%, en masse de la masse totale dudit premier chausson auxiliaire (200 ; 700).

4. Procédé de fabrication selon l'une quelconque des revendications 1 à 3, **caractérisé en ce que** la semelle d'usure (100 ; 550) comprend selon sa face externe (101) au moins une projection (105) se projetant de cette dernière, et **en ce que** la partie de semelle (210) du premier chausson auxiliaire (200) comprend au moins une zone adaptée (260) pour recevoir, au moins en partie, ladite au moins une projection (105).

5. Procédé de fabrication selon la revendication 4, **caractérisé en ce que** ladite au moins une projection comprend une face inférieure configurée pour venir en contact avec le sol.

6. Procédé de fabrication d'une chaussure (500) selon l'une ou l'autre des revendications 4 et 5, **caractérisé en ce que** le procédé comprend une étape de fourniture d'un second chausson principal (800) ayant une partie de semelle comprenant au moins une zone adaptée pour recevoir, au moins en partie, ladite projection (560), le second chausson principal (800) étant disposé :
- sur le premier chausson auxiliaire (700) à l'étape (v) en sorte que le premier chausson auxiliaire (700) soit disposé, au moins en partie, entre le second chausson principal (800) et le premier chausson principal (600) ; ou
- sur le premier chausson principal (600) à l'étape (v) en sorte que le second chausson principal (800) soit disposé, au moins en partie, entre le premier chausson principal (600) et le premier chausson auxiliaire (7).

7. Procédé de fabrication d'une chaussure (500) selon la revendication 6, **caractérisé en ce qu'**il comprend :
- la fourniture d'un second chausson auxiliaire (900) dans une pièce textile, dont au moins une partie ou l'intégralité est thermofusible et a une température de fusion T2 (°C) ; et
- la disposition à l'étape (v) du second chausson auxiliaire (900) sur le second chausson principal (800) et la semelle d'usure (560) en sorte de recouvrir, au moins en partie (700), le premier chausson principal, le premier chausson auxiliaire, le second chausson principal (800), la semelle d'usure (550), et notamment la jonction (580) entre le premier chausson principal et la semelle d'usure ;
- la température de chauffage Tc est supérieure ou égale à la température T2 en sorte d'obtenir la fusion de la partie thermofusible ou de l'intégralité du second chausson auxiliaire.

8. Procédé de fabrication d'une chaussure selon l'une quelconque des revendications 1 à 7, **caractérisé en ce que** la partie de semelle du premier chausson principal et/ou la partie de semelle du premier chausson auxiliaire, et/ou la partie de semelle du second chausson principal, comprend/comprennent chacune, une région thermofusible dont la température de fusion est inférieure ou égale à la température de chauffage Tc, la ou lesdites régions thermofusible(s) étant orientée(s) en regard de la semelle d'usure.

9. Procédé de fabrication d'une chaussure selon la revendication 8, **caractérisé en ce que** la partie de semelle du premier chausson principal comprend des couches interne et externe opposées, la couche externe étant orientée en regard de la semelle d'usure, **en ce que** la couche externe comprend ladite région thermofusible, et **en ce que** la couche interne comprend au moins une région non thermofusible, en particulier comprend un ou plusieurs fils élastiques.

10. Procédé de fabrication selon l'une quelconque des revendications 4 à 9, **caractérisé en ce que** la ou les zone(s) adaptée(s) (260) pour recevoir une ou plusieurs projection(s) de la partie de semelle du premier chausson auxiliaire (200 ; 700) et/ou de la partie de semelle du second chausson principal (800) et/ou de la partie de semelle du second chausson auxiliaire (900) destinée(s) à recevoir au moins en partie la ou les projection(s) (105 ; 560) de la semelle d'usure (100 ; 550) est/sont chacune, une ouverture traversante (260) ou une poche.

11. Procédé de fabrication selon la revendication 10, **caractérisé en ce que** la ou les ouvertures traversantes, et/ou la ou les poches, sont formées par au moins l'un des moyens choisis parmi les moyens suivants : lors de la construction textile du premier chausson auxiliaire et/ou du second chausson principal et/ou du seconde chausson auxiliaire ; par emboutissage ; par fusion, notamment lors de l'étape vi) ; et par une combinaison d'au moins deux desdits moyens.

12. Procédé de fabrication d'une chaussure selon la revendication 1 ou la revendication 6, **caractérisé en ce que** le premier chausson principal et, le premier chausson auxiliaire ou le second chausson principal, sont dans une pièce textile unitaire.

13. Procédé de fabrication selon l'une quelconque des revendications 1 à 12, **caractérisé en ce que** la semelle d'usure (100 ; 550) comprend plusieurs projections (105 ; 560 ; 1055) se projetant de sa face externe, en particulier lesdites projections (105 ; 560 ; 1055) sont des crampons.

## Patentansprüche

1. Verfahren zur Herstellung eines Schuhs (300; 500; 1200), umfassend die folgenden Schritte:
(i) Bereitstellen mindestens eines ersten Hauptschuhs (5; 600) aus einem Textilstück, der einen Sohlenabschnitt (10; 610) aufweist;
(ii) Platzieren zumindest des ersten Hauptschuhs (5; 600) auf einer Vorform;
(iii) festes Verbinden einer Laufsohle (100; 550) mit dem Sohlenabschnitt (10; 610) des ersten Hauptschuhs (5; 600);
(iv) Bereitstellen zumindest eines ersten Zusatzschuhs (200; 700) aus einem Textilstück, wobei zumindest ein Abschnitt davon oder der gesamte Schuh heißschmelzbar ist und eine Schmelztemperatur T1 (°C) aufweist:
(v) Anordnen des ersten Zusatzschuhs (200; 700) an dem ersten Hauptschuh (5; 600) und der Laufsohle (100; 550) auf solche Weise, dass zumindest zum Teil der erste Hauptschuh (5; 600), die Laufsohle (100; 550) und die Verbindung (150; 580) zwischen dem ersten Hauptschuh (100; 550) und der Laufsohle (100; 550) bedeckt werden;
(vi) Aussetzen der Anordnung, umfassend den ersten Zusatzschuh (200; 700), den ersten Hauptschuh (5; 600) und die Laufsohle (100; 550), die an der Vorform (110) angeordnet ist, einer Heiztemperatur Tc, die höher als die oder gleich der Temperatur T1 ist, auf solche Weise, dass das Schmelzen des heißschmelzbaren Abschnitts oder des gesamten ersten Zusatzschuhs (200; 700) erreicht wird,
(vii) Entfernen der Anordnung von der Vorform (110) und Erlangen des Schuhs, und/oder bei Schritt (vi) wird die auf der Vorform angeordnete Anordnung zumindest teilweise in eine Gegenform gelegt.

2. Verfahren zur Herstellung eines Schuhs (300; 500) nach Anspruch 1, **dadurch gekennzeichnet, dass** der erste Zusatzschuh (200; 700) aus einem einstückigen, insbesondere gestrickten Textilstück besteht.

3. Verfahren zur Herstellung eines Schuhs (300; 500) nach einem der Ansprüche 1 und 2, **dadurch gekennzeichnet, dass** der heißschmelzbare Teil des ersten Zusatzschuhs (200; 700) mindestens 50 Massen-%, bevorzugter mindestens 80 Massen-%, der Gesamtmasse des ersten Zusatzschuhs (200; 700) darstellt.

4. Herstellungsverfahren nach einem der Ansprüche 1 bis 3, **dadurch gekennzeichnet, dass** die Laufsohle (100; 550) entlang ihrer Außenseite (101) mindestens einen Vorsprung (105) umfasst, der von dieser hervorsteht, und dass der Sohlenabschnitt (210) des ersten Zusatzschuhs (200) zumindest eine Zone (260) umfasst, die dazu geeignet ist, den mindestens einen Vorsprung (105) zumindest teilweise aufzunehmen.

5. Herstellungsverfahren nach Anspruch 4, **dadurch gekennzeichnet, dass** der mindestens eine Vorsprung eine Unterseite umfasst, die dazu ausgestaltet ist, mit dem Boden in Kontakt zu kommen.

6. Verfahren zur Herstellung eines Schuhs (500) nach einem der Ansprüche 4 und 5, **dadurch gekennzeichnet, dass** das Verfahren einen Schritt eines Bereitstellens eines zweiten Hauptschuhs (800) umfasst, der einen Sohlenabschnitt aufweist, der mindestens eine Zone umfasst, die angepasst ist, um den Vorsprung (560) zumindest teilweise aufzunehmen, wobei der zweite Hauptschuh (800) angeordnet wird:
- während Schritt (v) auf dem ersten Zusatzschuh (700) auf solche Weise, dass der erste Zusatzschuh (700) zumindest zum Teil zwischen dem zweiten Hauptschuh (800) und dem ersten Hauptschuh (600) angeordnet ist, oder
- während Schritt (v) auf dem ersten Hauptschuh (600) auf solche Weise, dass der zweiten Hauptschuh (800) zumindest zum Teil zwischen dem ersten Hauptschuh (600) und dem ersten Zusatzschuh (7) angeordnet ist.

7. Verfahren zur Herstellung eines Schuhs (500) nach Anspruch 6, **dadurch gekennzeichnet, dass** es umfasst:
- die Bereitstellung eines zweite Zusatzschuhs (900) aus einem Textilstück, wobei zumindest ein Abschnitt davon oder der gesamte Schuh heißschmelzbar ist und eine Schmelztemperatur T2 (°C) aufweist, und
- während des Schritts (v) die Anordnung des zweiten Zusatzschuhs (900) auf dem zweiten Hauptschuh (800) und der Laufsohle (560) auf solche Weise, dass zumindest zum Teil (700) der erste Hauptschuh, der erste Zusatzschuh, der zweite Hauptschuh (800), die Laufsohle (550) und insbesondere die Verbindung (580) zwischen dem ersten Hauptschuh und der Laufsohle bedeckt werden,
- wobei die Heiztemperatur Tc höher als oder gleich wie die Temperatur T2 ist, auf solche Weise, dass das Schmelzen des heißschmelzbaren Abschnitts oder des gesamten zweiten Zusatzschuhs erreicht wird.

8. Verfahren zur Herstellung eines Schuhs nach einem der Ansprüche 1 bis 7, **dadurch gekennzeichnet, dass** der Sohlenabschnitt des ersten Hauptschuhs und/oder der Sohlenabschnitt des ersten Zusatzschuhs, und/oder der Sohlenabschnitt des zweiten Hauptschuhs, jeweils einen heißschmelzbaren Bereich umfasst/umfassen, dessen Schmelztemperatur niedriger als die oder gleich der Heiztemperatur Tc ist, wobei der oder die heißschmelzbaren Bereiche der Laufsohle zugewandt ausgerichtet sind.

9. Verfahren zur Herstellung eines Schuhs nach Anspruch 8, **dadurch gekennzeichnet, dass** der Sohlenabschnitt des ersten Hauptschuhs gegenüberliegende innere und äußere Schichten umfasst, wobei die äußere Schicht der Laufsohle zugewandt ausgerichtet ist, dass die äußere Schicht den heißschmelzbaren Bereich umfasst, und dass die innere Schicht zumindest einen nicht heißschmelzbaren Bereich umfasst, insbesondere einen oder mehrere elastische Fäden umfasst.

10. Herstellungsverfahren nach einem der Ansprüche 4 bis 9, **dadurch gekennzeichnet, dass** die Zone(n), die dazu geeignet ist/sind (260), einen oder mehrere Vorsprünge des Sohlenabschnitts des ersten Zusatzschuhs (200; 700) und/oder des Sohlenabschnitts des zweiten Hauptschuhs (800) und/oder des Sohlenabschnitts des zweiten Zusatzschuhs (900) aufzunehmen, der/die dazu bestimmt ist/sind, zumindest teilweise den oder die Vorsprünge (105; 560) der Laufsohle (100; 550) aufzunehmen, jeweils eine Durchgangsöffnung (260) oder eine Tasche ist/sind.

11. Herstellungsverfahren nach Anspruch 10, **dadurch gekennzeichnet, dass** die Durchgangsöffnung(en) und/oder die Tasche(n) durch zumindest eines der Mittel gebildet werden, die aus den folgenden Mitteln ausgewählt sind: während der textilen Konstruktion des ersten Zusatzschuhs und/oder des zweiten Hauptschuhs und/oder des zweiten Zusatzschuhs, durch Tiefziehen, durch Schmelzen, insbesondere während des Schritts vi), und durch eine Kombination von mindestens zwei der Mittel.

12. Verfahren zur Herstellung eines Schuhs nach Anspruch 1 oder 6, **dadurch gekennzeichnet, dass** der erste Hauptschuh und, der erste Hilfsschuh oder der zweite Hauptschuh, in einem einheitlichen Textilstück sind.

13. Herstellungsverfahren nach einem der Ansprüche 1 bis 12, **dadurch gekennzeichnet, dass** die Laufsohle (100; 550) mehrere Vorsprünge (105; 560; 1055) umfasst, die von ihrer Außenseite hervorstehen, insbesondere die Vorsprünge (105; 560; 1055) Stollen sind.

## Claims

1. A process for manufacturing a shoe (300; 500; 1200) comprising the following steps:
(i) providing at least one main liner (5; 600) in a textile piece, having a sole part (10; 610);
(ii) placing at least the first main liner (5; 600) on a preform;
(iii) joining an outsole (100; 550) to the sole part (10; 610) of the first main liner (5; 600);
(iv) providing at least one first auxiliary liner (200; 700) in a textile piece, at least part or all of which is thermofusible and has a melting temperature T1 (°C);
(v) arranging the first auxiliary liner (200; 700) on the first main liner (5; 600) and the outsole (100; 550) so as to cover, at least partially, the first main liner (5; 600), the outsole (100; 550), and the junction (150; 580) between the first main liner (100; 550) and the outsole (100; 550);
(vi) subjecting the assembly comprising the first auxiliary liner (200; 700), the first main liner (5; 600), and the outsole (100; 550), placed on the preform (110), to a heating temperature Tc greater than or equal to the temperature T1 so as to achieve melting of the thermofusible part or of the entire first auxiliary liner (200; 700);
(vii) removing the assembly from the preform (110) and recovering the shoe, and where during step (vi), the assembly disposed on the preform is placed, at least in part, in a counter-mold.

2. The process for manufacturing a shoe (300; 500) as claimed in claim 1, **characterized in that** the first auxiliary liner (200; 700) is in a unitary textile piece, in particular knitted.

3. The process for manufacturing a shoe (300; 500) as claimed in either one of claims 1 and 2, **characterized in that** the thermofusible part of the first auxiliary liner (200; 700) represents at least 50%, more preferably at least 80%, by mass of the total mass of said first auxiliary liner (200; 700).

4. The manufacturing process as claimed in any one of claims 1 to 3, **characterized in that** the outsole (100; 550) comprises on its outer face (101) at least one projection (105) projecting from the latter, and **in that** the sole part (210) of the first auxiliary liner (200) comprises at least one area (260) adapted to receive, at least in part, said at least one projection (105).

5. The manufacturing process as claimed in claim 4, **characterized in that** said at least one projection comprises a lower face configured to come into contact with the ground.

6. The process for manufacturing a shoe (500) as claimed in either one of claims 4 and 5, **characterized in that** the process comprises a step of providing a second main liner (800) having a sole part comprising at least one area adapted to receive, at least in part, said projection (560), the second main liner (800) being arranged:
- on the first auxiliary liner (700) in step (v) such that the first auxiliary liner (700) is disposed, at least in part, between the second main liner (800) and the first main liner (600); or
- on the first main liner (600) in step (v) such that the second main liner (800) is disposed, at least in part, between the first main liner (600) and the first auxiliary liner (7).

7. The process for manufacturing a shoe (500) as claimed in claim 6, **characterized in that** it comprises:
- providing a second auxiliary liner (900) in a textile piece, at least part or all of which is thermofusible and has a melting temperature T2 (°C); and
- arranging in step (v) the second auxiliary liner (900) on the second main liner (800) and the outsole (560) so as to cover, at least partially (700), the first main liner, the first auxiliary liner, the second main liner (800), the outsole (550), and in particular the junction (580) between the first main liner and the outsole;
- the heating temperature Tc is greater than or equal to the temperature T2 in order to obtain the fusion of the thermofusible part or of the whole of the second auxiliary liner.

8. The shoe manufacturing process as claimed in any one of claims 1 to 7, **characterized in that** the sole part of the first main liner and/or the sole part of the first auxiliary liner, and/or the sole part of the second main liner, each comprises a thermofusible region whose melting temperature is less than or equal to the heating temperature Tc, said thermofusible region(s) being oriented opposite the outsole.

9. The shoe manufacturing process as claimed in claim 8, **characterized in that** the sole part of the first main liner comprises opposite inner and outer layers, the outer layer being oriented opposite the outsole, **in that** the outer layer comprises said thermofusible region, and **in that** the inner layer comprises at least one non-thermofusible region, in particular comprises one or more elastic yarns.

10. The manufacturing process as claimed in any one of claims 4 to 9, **characterized in that** the area(s) (260) adapted to receive one or more projection(s) of the sole part of the first auxiliary liner (200; 700) and/or of the sole part of the second main liner (800) and/or of the sole part of the second auxiliary liner (900) intended to receive at least part of the projection(s) (105; 560) of the outsole (100; 550) is/are each a through-opening (260) or a pocket.

11. The manufacturing process as claimed in claim 10, **characterized in that** the through-opening(s), and/or pocket(s), are formed by at least one of the means selected from the following means: during the textile construction of the first auxiliary liner and/or the second main liner and/or the second auxiliary liner; by stamping; by fusion, in particular during step vi); and by a combination of at least two of said means.

12. The shoe manufacturing process as claimed in claim 1 or claim 6, **characterized in that** the first main liner and, the first auxiliary liner or the second main liner, are in a unitary textile piece.

13. The manufacturing process as claimed in any one of claims 1 to 12, **characterized in that** the outsole (100; 550) comprises a plurality of projections (105; 560; 1055) projecting from its outer face, in particular said projections (105; 560; 1055) are studs.
